# EUROPÄISCHE PATENTANMELDUNG

(11) **EP 0 826 423 A2**
(43) Veröffentlichungstag der Anmeldung: **04.03.1998**
(21) Anmeldenummer: 97114525.5
(22) Anmeldetag: 22.08.1997
(51) Int. Cl.: B03B 9/06

(54) **Verfahren und Einrichtung zur Aufbereitung eines metallhaltigen Gemenges von Altmaterialien**

(30) Priorität: 31.08.1996 DE 19635472
(71) Anmelder: Trienekens GmbH, 41747 Viersen (DE)
(72) Erfinder: Arnold, Stefan, 47877 Willich (DE); Hüskens, Jürgen, 41748 Viersen (DE); Emundts, Johannes, Dr., II, 52076 Aachen (DE)

(57) **Zusammenfassung**

Die vorliegende Erfindung betrifft ein Verfahren und eine Einrichtung zur Aufbereitung eines metallhaltigen Gemenges von Altmaterialien nach dem Oberbegriff des Anspruchs 1 bzw. 10, das bzw. die eine Herstellung einer an NE-Metallen angereicherten und weitgehend von Störstoffen befreiten Fraktion in wirtschaftlicher Weise dadurch erlaubt, daß Schwerteile in einem Schwerteiltrenner mittels eines Luftstroms aus dem Gemenge abgetrennt werden, die Bestandteile des verbleibenden Gemenges dann in zwei Stufen zerkleinert werden, aus dem zerkleinert vorliegenden Gemenge Fe-haltige Bestandteile mittels eines Fe-Abscheiders abgetrennt werden und das restliche Gemenge durch eine NE-Trennvorrichtung in wenigstens zwei Fraktionen aufgespalten wird bzw. daß dem Zerkleinerer ein Schwerteile mittels eines Luftstroms abtrennender Schwerteiltrenner vorgeschaltet und ein zweiter Zerkleinerer mit einem nachgeordneten Fe-Abscheider zur Abtrennung Fe-haltiger Bestandteile des Gemenges nachgeschaltet und dem Fe-Abscheider eine NE-Trennvorrichtung nachgeschaltet ist.

## Beschreibung

Die vorliegende Erfindung betrifft ein Verfahren und eine Einrichtung zur Aufbereitung eines metallhaltigen Gemenges von Altmaterialien, insbesondere einer NE-Fraktion aus einer Verpackungssortieranlage nach dem Oberbegriff des Anspruchs 1 bzw. 10.

Im Rahmen einer Verwertung von Altmaterialien ist man bemüht, zumindest einzelne Bestandteile dieser Altmaterialien als Sekundärrohstoffe zurückzugewinnen und sie nach Möglichkeit wieder in Produktionsprozesse einzusetzen. Für einen Einsatz in Produktionsprozesse sind derartige Sekundärrohstoffe in hoher Qualität und Quantität herzustellen, was zu entsprechend hohen Anforderungen an Trenntechniken für die Altmaterialien führt. Von besonderer Bedeutung sind in diesem Zusammenhang Materialverbunde, die zum einen metallhaltig sind und zum anderen aufgrund ihrer Herstellung besonders hohe Anforderungen an eine Trenntechnik stellen. Hierbei ist festzustellen, daß hochentwickelte Trenntechniken zwar gute Trennergebnisse mit hoher Qualität und Quantität des hergestellten Sekundärrohstoffs liefern, jedoch im Betrieb relativ störanfällig sind und es einer entsprechenden Aufbereitung der Altmaterialien vor deren Behandlung bedarf.

Ein metallhaltiges Gemenge von Altmaterialien kann je nach seiner Herkunft einen unterschiedlichen Gehalt an nichtmetallischen Bestandteilen und Störstoffen aufweisen. Eine NE-Fraktion aus einer Verpackungssortieranlage kann beispielsweise zellulosehaltige Verpackungen und Steine enthalten, die bei einer Auftrennung wertvoller Aluminiumverbunde in eine weitgehend reine Aluminiumfraktion und eine Restfraktion erhebliche Betriebsstörungen in einer Trennanlage hervorrufen können. In ähnlicher Weise treten auch bei einer Verwertung von Elektronikschrott derartige Probleme auf, bei der die Rückgewinnung von Metallen von den verbundartig beschichteten Leiterplatten im Vordergrund steht und elektrische Bauteile bzw. Teile hiervon oder andere Störstoffe einen Störfaktor für eine Trennanlage bilden.

Eine für die Auftrennung von entsprechend aufbereiteten Verbunden beispielsweise geeignete Trennanlage ist aus der EP 0 581 089 A2 bekannt. Hierbei werden die aufbereiteten Verbunde in einer Mikrowirbelmühle, die mit einem hoch beschleunigbaren Rotor bestückt ist, gemahlen, wobei der metallische Teil der Verbunde in kleine kugelförmige Körper umgeformt und während des Mahlvorgangs von den restlichen Verbundmaterialien abgetrennt wird. Zur Aufbereitung der eingesetzten Verbunde ist lediglich eine vorgeschaltete Zerkleinerung auf Teile mit einem Durchmesser von weniger als 10 mm vorgesehen. Dabei besteht die Gefahr, daß auch auf diese Größe zerkleinerte relativ harte Störstoffe Beschädigungen bei der Trennanlage hervorrufen können. Ferner ist eine Zerkleinerung auf diesen Durchmesser relativ kostenintensiv.

Aufgabe der vorliegenden Erfindung ist es, ein Verfahren und eine Einrichtung zur Aufbereitung eines metallhaltigen Gemenges von Altmaterialien nach dem Oberbegriff des Anspruchs 1 bzw. 10 anzugeben, das bzw. die eine Herstellung einer an NE-Metallen angereicherten und weitgehend von Störstoffen befreiten Fraktion in wirtschaftlicher Weise erlaubt.

Diese Aufgabe wird durch den kennzeichnenden Teil des Anspruch 1 bzw. 10 gelöst.

Hierbei werden Störstoffe frühzeitig und auf einfache Weise aus dem Gemenge abgeschieden, die Bestandteile des verbleibenden Gemenges mit einer hohen Durchsatzleistung zerkleinert und nunmehr zerkleinerte, ggf. vor einer Zerkleinerung mit anderen Materialien verbundene Fe-Teile abgetrennt und nicht für eine Weiterverarbeitung vorgesehene Bestandteile in wenigstens eine Fraktion abgetrennt. Hierdurch läßt sich eine, weitgehend von Störstoffen befreite, NE-Metall-Fraktion mit einer bezogen auf das eingesetzte Gemenge relativ hohen Ausbeute erzeugen.

Wird das restliche Gemenge mittels einer als NE-Abscheider ausgebildeten NE-Trennvorrichtung in zwei Fraktionen aufgespalten, läßt sich eine Fraktion mit einem hohen Gehalt an NE-Materialien in besonders einfacher Weise erzielen.

Wird das restliche Gemenge mittels einer als Querstromsichter ausgebildeten NE-Trennvorrichtung in wenigstens zwei Fraktionen aufgespalten, läßt sich eine Fraktion mit einem besonders hohen Gehalt an NE-Materialien erzielen.

Der erste Zerkleinerer ist vorteilhaft als langsam laufende Rotorschere ausgebildet. In der ersten Stufe der Zerkleinerung werden die Bestandteile des Gemenges bevorzugt auf eine Korngröße von 30 - 120, besonders bevorzugt 40 - 80 mm zerkleinert.

Der zweite Zerkleinerer ist vorteilhaft als halbschnell laufendes Schneidwerk ausgebildet. In der zweiten Stufe der Zerkleinerung werden die Bestandteile des Gemenges bevorzugt auf eine Korngröße von 10 - 30 mm zerkleinert. Zellulose und Kunststoff-haltige Bestandteile des Gemenges werden zweckmäßig vor der Schwerteiltrennung abgetrennt. Der Schwerteiltrennung ist bevorzugt eine Sortiervorrichtung mit einem Erfassungssensor für Zellulose und Kunststoff-haltige Bestandteile und einer pneumatischen Ausblaseinheit vorgeschaltet.

Weitere Ausgestaltungen der Erfindung sind den Unteransprüchen und der nachfolgenden Beschreibung zu entnehmen.

Die Erfindung wird nachstehend anhand eines Ausführungsbeispiels einer Einrichtung zur Aufbereitung einer NE-Fraktion aus einer Verpackungssortieranlage näher erläutert.

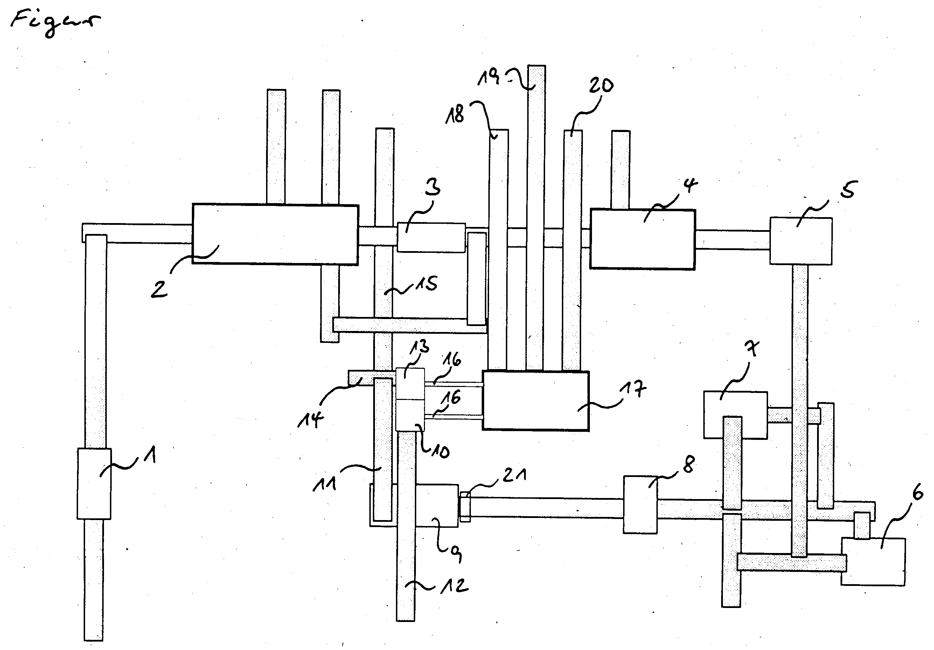

Die Figur zeigt eine schematische Darstellung einer Einrichtung zur Aufbereitung einer NE-Fraktion aus einer Verpackungssortieranlage.

Die in der Figur dargestellte Einrichtung umfaßt eine als Auflösetrommel 1 ausgebildete Auflösevorrichtung für aufzulösende und aufzulockernde Ballen oder ggf. gepreßte Schüttungen einer NE-Fraktion aus einer Verpackungssortieranlage, von der zwei hintereinandergeschaltete Förderbänder zu einer Lesestation 2 führen. Die Lesestation 2 ist über ein Förderband mit einer sensorgesteuerten Sortiervorrichtung 3 verbunden, von der ein Förderband zu einem Schwerteiltrenner 4 führt. Dem Schwerteiltrenner 4 ist ein Förderband und ein dem Förderband folgender, erster, als langsam laufende Rotorschere 5 ausgebildeter Zerkleinerer nachgeordnet.

Die Rotorschere 5 ist über Förderbänder an einen zweiten als halbschnell laufendes Schneidwerk 6 ausgebildeten Zerkleinerer und an einen dritten, ebenfalls als halbschnell laufendes Schneidwerk 7 ausgebildeten Zerkleinerer angeschlossen. Das in das Schneidwerk 6 führende Förderband ist reversierbar ausgebildet und fördert bei entsprechend gewählter Laufrichtung auf ein zu dem Schneidwerk 7 führendes Förderband.

Dem Schneidwerk 6 ist ein Ablaufband und dem Schneidwerk 7 sind zwei hintereinandergeschaltete Ablaufbänder zugeordnet. Den Schneidwerken 6, 7 ist ein als Überbandmagnet 8 ausgebildeter Fe-Abscheider nachgeschaltet. Der Überbandmagnet 8 ist über einem Förderband angeordnet, auf das die Ablaufbänder der Schneidwerke 6,7 münden und das zu einer als Wirbelstromabscheider 9 ausgebildeten NE-Trennvorrichtung führt.

Dem Wirbelstromabscheider 9 ist ein Ablaufband 11 und ein zu einem Bunker 10 führendes, reversierbares Förderband 12 zugeordnet. Das Ablaufband 11 ist wahlweise auf ein in einen zweiten Bunker 13 führendes Förderband 14 oder auf ein Austragsband 15 fördernd schaltbar vorgesehen. Die Bunker 10, 13 sind jeweils mit einer Förderschnecke 16 versehen, die in eine als Querstromsichter 17 ausgebildete NE-Trennvorrichtung führen. Der Querstromsichter 17 wird über eine nicht dargestellte Versorgungsleitung mit Trennluft versorgt und ist austragsseitig an drei Austragsbänder 18, 19, 20 angeschlossen. Das zu dem Wirbelstromabscheider 9 führende Förderband wird an seinem dem Wirbelstromabscheider 9 benachbarten Ende über eine mit Permanentmagneten versehene Magnettrommel 21 umgelenkt. In dem Schwerteiltrenner 4 ist ein mit Druckluft beaufschlagbarer Spalt zwischen dem Ende des in den Schwerteiltrenner 4 reichenden Förderbands und einer Auffangplatte ausgebildet, in den der Luftstrahl einer Düsenanordnung richtbar ist.

Die Rotorschere 5 umfaßt zwei umfangsseitig mit hakenartigen und sich nach radial außen erstreckenden Eingriffselementen versehene Rotoren. Die Rotoren sind mit Schneidscheiben versehen und derartig zueinander ausgerichtet, daß die Eingriffselemente in zu zerkleinerndes Material eingreifen und es zwischen den kammartig in Eingriff gelangenden Schneidscheiben unter Scherwirkung vorbeiziehen können, wobei das Material streifenartig zerkleinert wird. Für bandartiges Material, das bei einem ersten Schnitt in längere Streifen geschnitten wird, ist ggf. eine Rückführung der Streifen über ein Sieb in die Rotorschere vorsehbar.

Die Rotorschere weist Schneidscheiben für eine Zerkleinerung auf eine Korngröße von 40 - 70 mm auf und läuft mit etwa 10 - 20 U/min.

Die Schneiderwerke 6, 7 sind als Einwellen-Schneidwerke mit radial nachstellbaren Statormessern ausgebildet und laufen mit etwa 150 - 400 U/min. Unterhalb jedes Schneidwerks 6, 7 ist ein Sieb austauschbar vorgesehen, durch das auf eine Korngröße von kleiner 30 mm zerkleinertes Material fällt, während Material mit einer darüberliegenden Korngröße in das jeweilige Schneidwerk 6, 7 zurückgefördert und weiter zerkleinert wird. Den Schneidwerken 6, 7 sind jeweils Vorlagebehälter zugeordnet.

Der Querstromsichter 17 umfaßt einen Zuführelevator mit einer nachgeschalteten Vibrorinne, über die das durch die Förderschnecken 16 geförderte Material zu einer mit einem Luftstrom beaufschlagbaren Trennzone transportierbar ist. Das von der Vibrorinne kommende Material wird in der Trennzone quer zur Fallrichtung mit dem Luftstrom beaufschlagt, wobei die unterschiedlich stark beschleunigten Materialien in unterhalb der Trennzone nebeneinander angeordnete Schächte fallen und von dort aus über Ablaufelevatoren auf die Austragsbänder 18, 19, 20 gelangen.

Eine in Ballen oder ggf. als gepreßte Schüttung angelieferte NE-Fraktion aus einer Verpackungssortieranlage, die u. a. Al-haltige Getränkeverpackungen, Verschlußkappen, Aluminiumdeckel und andere Al-haltige Verpackungen und Behältnisse enthält, wird in die Auflösetrommel 1 transportiert, in welcher die Ballen oder die ggf. als gepreßte Schüttung vorliegende NE-Fraktion unter Drehbewegung und Kontakt mit Einbauten der Auflösetrommel 1 aufgelöst bzw. aufgelockert wird.

Über die beiden hintereinander geschalteten Förderbänder gelangt die NE-Fraktion in die Lesestation 2, bei der durch manuelle Sortierung grobe Störstoffe wie z. B. Geschirrschrott abgetrennt und über ein Förderband ausgetragen werden. Von der Lesestation 2 gelangt die NE-Fraktion über ein Förderband in die sensorgesteuerte Sortiervorrichtung 3, die Kunststoff und Zellulose-haltige Bestandteile der NE-Fraktion über einen auf das Förderband blickenden IR-Sensor erkennt und vor einer Übergabe der NE-Fraktion auf das zu dem Schwerteiltrenner 4 führende Förderband pneumatisch auf ein Austragsband abtrennt. Bei diesem Trennschritt werden vor allem Al-haltige Getränkeverpackungen aus der NE-Fraktion abgetrennt, die einen für die weitere Verarbeitung in einer vorstehend erwähnten Trennanlage zu hohen Gehalt an Zellulose aufweisen und Betriebsstörungen in dieser Trennanlage hervorrufen können.

Die in den Schwerteiltrenner 4 gelangende NE-Fraktion wird über den mit Druckluft beaufschlagbaren Spalt gefördert, wobei schwere Teile auf ein Austragsband absinken bzw. herunterfallen und die leichteren Bestandteile diesen Spalt überqueren und zu der Rotorschere 5 gefördert werden.

In der Rotorschere 5 werden die Bestandteile der nach der Schwerteiltrennung verbleibenden NE-Fraktion auf eine Korngröße von 40 - 80 mm in einer ersten Stufe vorzerkleinert, bevor sie in einer zweiten Stufe über die wahlweise zuschaltbaren Schneidwerk 6, 7 auf eine Korngröße von 15 - 30 mm zerkleinert werden. Hierbei kann die Zerkleinerung in der zweiten Stufe entweder über das Schneidwerk 6 oder 7 erfolgen, da beide über entsprechende Schaltungsmöglichkeiten der Transportbänder mit der Rotorschere 5 sowie mit dem zu dem Überbandmagneten 8 und dem Wirbelstromabscheider 9 führenden Förderband in Verbindung bringbar sind. Auf diese Weise lassen sich die Durchsatsleitungen der beiden Zerkleinerungsstufen optimal aufeinander abstimmen.

Die zerkleinerte NE-Fraktion wird nach den Schneidwerken 6, 7 auf einem Förderband unter dem Überbandmagneten 8 vorbeigeführt, wobei relativ große Fe-Bestandteile von diesem abgeschieden werden. Kleinere Fe-Bestandteile werden ggf. über die am Ende des Förderbandes vorgesehene Magnettrommel 21 abgeschieden.

Für die weitere Aufbereitung der restlichen, nach der Fe-Abscheidung vorliegenden NE-Fraktion sind zwei Betriebsweisen der Einrichtung möglich.

In einer besonders einfachen Weise wird die restliche NE-Fraktion über den Wirbelstromabscheider 9 in eine Fraktion mit einem hohen und in eine Fraktion mit einem geringen Gehalt an Aluminium aufgespalten. Hierzu wird der Wirbelstromabscheider 9 mit Wirbelstromeinsatz betrieben und die Al-reiche Fraktion über das Ablaufband 11 und die Al-arme Fraktion über das reversierbare Förderband 12 abgeführt. Sollte bei dieser Betriebsweise eine weitere Anreicherung der Al-reichen Fraktion gewünscht sein, so kann diese Fraktion über das Förderband 14, den Bunker 13 und die Förderschnecke 16 in den Querstromsichter 17 gefahren und durch diesen weiter aufgespalten werden.

Bei einer anderen Betriebsweise wird die restliche NE-Fraktion in drei Fraktionen aufgespalten, wobei eine Fraktion einen besonders hohen Anteil an Aluminium aufweist. Hierzu wird der Wirbelstromabscheider 9 ohne Wirbelstromeinsatz als Fördervorrichtung betrieben und die restliche NE-Fraktion über das Förderband 12, den Bunker 10 und die Förderschnecke 16 in den Querstromsichter 17 gefahren. Die von der Förderschnecke 16 geförderte restliche NE-Fraktion wird über den Zuführelevator mit der nachgeschalteten Vibrorinne in die Trennzone gefördert und quer zur Fallrichtung mit Druckluft beaufschlagt. Hierbei werden die Bestandteile der NE-Fraktion je nach ihrem Al-Gehalt unterschiedlich stark abgelenkt, wobei die besonders Al-reichen Bestandteile gering und die Al-armen Bestandteile relativ stark abgelenkt werden und in die entsprechenden Schächte fallen. Bei dieser Betriebsweise läßt sich eine gewünschte Trennschärfe über die Zufuhr der Druckluft einstellen.

## Patentansprüche

1. Verfahren zur Aufbereitung eines metallhaltigen Gemenges von Altmaterialien, insbesondere einer NE-Fraktion aus einer Verpackungssortieranlage, bei dem Bestandteile des Gemenges zerkleinert werden, dadurch gekennzeichnet, daß Schwerteile in einem Schwerteiltrenner mittels eines Luftstroms aus dem Gemenge abgetrennt werden, die Bestandteile des verbleibenden Gemenges dann in zwei Stufen zerkleinert werden, aus dem zerkleinert vorliegenden Gemenge Fe-haltige Bestandteile mittels eines Fe-Abscheiders abgetrennt werden und das restliche Gemenge durch eine NE-Trennvorrichtung in wenigstens zwei Fraktionen aufgespalten wird.

2. Verfahren nach Anspruch 1, dadurch gekennzeichnet, daß das restliche Gemenge mittels eines NE-Abscheiders in zwei Fraktionen aufgespalten wird.

3. Verfahren nach Anspruch 1, dadurch gekennzeichnet, daß das restliche Gemenge mittels eines Querstromsichters in wenigstens zwei Fraktionen aufgespalten wird.

4. Verfahren nach einem der Ansprüche 1 bis 3, dadurch gekennzeichnet, daß die Bestandteile des nach der Schwerteiltrennung verbleibenden Gemenges in der ersten Stufe auf eine Korngröße von 30 - 120, bevorzugt 40 - 80 mm zerkleinert werden.

5. Verfahren nach einem der Ansprüche 1 bis 4, dadurch gekennzeichnet, daß die Bestandteile des verbleibenden Gemenges in der zweiten Stufe auf eine Korngröße von 10 - 30 mm zerkleinert werden.

6. Verfahren nach einem der Ansprüche 1 bis 5, dadurch gekennzeichnet, daß Zellulose und Kunststoff-haltige Bestandteile des Gemenges vor der Schwerteiltrennung abgetrennt werden.

7. Verfahren nach Anspruch 6, dadurch gekennzeichnet, daß die Zellulose und Kunststoff-haltigen Bestandteile über einen Sensor erfaßt und pneumatisch abgetrennt werden.

8. Verfahren nach einem der Ansprüche 1 bis 7, dadurch gekennzeichnet, daß grobe Störstoffe vor der Schwerteiltrennung in einer Lesestation aus dem Gemenge abgetrennt werden.

9. Verfahren nach einem der Ansprüche 1 bis 8, dadurch gekennzeichnet, daß ein in einem Gebinde vorliegendes Gemenge durch eine der Schwerteiltrennung vorgeschaltete Auflösevorrichtung aufgelockert wird.

10. Einrichtung zur Aufbereitung eines metallhaltigen Gemenges von Altmaterialien, insbesondere einer NE-Fraktion aus einer Verpackungssortieranlage, mit einem Zerkleinerer (5) für Bestandteile des Gemenges, dadurch gekennzeichnet, daß dem Zerkleinerer (5) ein Schwerteile mittels eines Luftstroms abtrennender Schwerteiltrenner (4) vorgeschaltet und ein zweiter Zerkleinerer (6) mit einem nachgeordneten Fe-Abscheider (8) zur Abtrennung Fe-haltiger Bestandteile des Gemenges nachgeschaltet und dem Fe-Abscheider (8) eine NE-Trennvorrichtung (9, 17) nachgeschaltet ist.

11. Einrichtung nach Anspruch 10, dadurch gekennzeichnet, daß die NE-Trennvorrichtung als Wirbelstromabscheider (9) ausgebildet ist.

12. Einrichtung nach Anspruch 10, dadurch gekennzeichnet, daß die NE-Trennvorrichtung als Querstromsichter (17) ausgebildet ist.

13. Einrichtung nach einem der Ansprüche 10 bis 12, dadurch gekennzeichnet, daß der erste Zerkleinerer (5) als langsamlaufende Rotorschere ausgebildet ist.

14. Einrichtung nach einem der Ansprüche 10 bis 13, dadurch gekennzeichnet, daß der zweite Zerkleinerer (6) als halbschnell laufendes Schneidwerk ausgebildet ist.

15. Einrichtung nach einem der Ansprüche 10 bis 14, dadurch gekennzeichnet, daß der erste Zerkleinerer (5) Mittel zur Zerkleinerung der Bestandteile des Gemenges auf eine Korngröße von 30 - 120, bevorzugt 40 - 80 mm aufweist.

16. Einrichtung nach einem der Ansprüche 10 bis 15, dadurch gekennzeichnet, daß der zweite Zerkleinerer (6) Mittel zur Zerkleinerung der Bestandteile des Gemenges auf eine Korngröße von 10 - 30 mm aufweist.

17. Einrichtung nach einem der Ansprüche 10 bis 16, dadurch gekennzeichnet, daß dem Schwerteiltrenner (4) eine Sortiervorrichtung (3) zur Aussortierung von Zellulose und Kunststoff-haltigen Bestandteilen des Gemenges vorgeschaltet ist.

18. Einrichtung nach einem der Ansprüche 10 bis 17, dadurch gekennzeichnet, daß dem Schwerteiltrenner (4) eine Auflösevorrichtung (1) zur Auflockerung eines in einem Gebinde oder in einer Schüttung vorliegenden Gemenges vorgeschaltet ist.
